# EUROPÄISCHE PATENTANMELDUNG

(11) **EP 3 446 935 A2**
(43) Veröffentlichungstag der Anmeldung: **27.02.2019**
(21) Anmeldenummer: 18189838.8
(22) Anmeldetag: 20.08.2018
(51) Int. Cl.: B60T 1/14, B60B 33/00, E04H 12/22, F16M 11/20

(54) **BEWEGLICHER STANDSOCKEL MIT ROLLEN**

(30) Priorität: 23.08.2017 DE 202017105072 U
(71) Anmelder: GLATZ AG, 8500 Frauenfeld (CH)
(72) Erfinder: Siegenthaler, Robert Ulrich, 8180 Bülach (CH)
(74) Vertreter: Schmauder & Partner AG Patent- & Markenanwälte VSP

(57) **Zusammenfassung**

Ein beweglicher Standsockel (10) für Sonnenschirme, Anzeigetafeln, Fahnenstangen und dergleichen umfasst einen Gewichtsteil (50), auf dessen Unterseite zumindest drei, vorzugsweise vier Lenkrollen (53) fest angeordnet sind, mit Anbauelementen (30) für einen Sonnenschirm, eine Anzeigetafel, eine Fahnenstange oder für andere aufzustellende Gegenstände und mit einer Anzahl von vorzugsweise vier absenkbaren Blockierfüssen (60). Zur Verbesserung des Bedienungskomforts ohne Beeinträchtigung der Standfestigkeit wird vorgeschlagen, dass die Blockierfüsse (60) im Randbereich des Gewichtsteiles (50) über zwei gegenüberliegende Brückenträger (71, 72) und ein Mitteljoch (75) miteinander verbunden und über je zwei Schwenkhebel (77A und 77B), (79A und 79B) im Wesentlichen parallellogrammartig absenkbar am Gewichtsteil (50) verankert sind und ein Spannhebel (80) auf dem Mitteljoch (75) aufliegend angebracht ist, und dass ein Druckelement (85) zu einem Blockier-Pedal (87) auf der Oberseite des Standsockels (10) führt.

## Beschreibung

### Technisches Gebiet

Die Erfindung betrifft einen beweglichen Standsockel für Sonnenschirme, Anzeigetafeln, Fahnenstangen oder ähnliche Anwendungen, wobei der Standsockel einen Gewichtsteil und Rollen an der Sockelunterseite sowie absenkbare Standfüsse zur Herbeiführung einer standfesten Situation umfasst.

### Stand der Technik

Es sind durchaus einige Lösungen bekannt, wie ein beweglicher Standsockel von der standfesten Situation auf dem Standgrund in eine verfahrbare (rollbare) Situation und zurück gebracht werden kann. In einer Vielzahl von Lösungen wird dabei vorgeschlagen, das Sockelgewicht für die verfahrbare (rollbare) Situation anzuheben und für die standfeste Situation abzusenken. Dies bedingt oft lange, nach oben oder seitlich vorstehende Hebel und Kraftübertragungseinrichtungen. Dies wird beispielsweise aus der EP 1 571 277 A1 (Fig. 3a und 3b) deutlich. Dies ist nicht nur wegen des Kraftaufwandes nachteilig, sondern auch bezüglich der vorstehenden Hebel.

Eben diese Nachteile, nämlich die Notwendigkeit, den Gewichtsteil des Standfusses anheben zu müssen und dabei auch noch aufwändige und nach ausserhalb des Standfusses reichende Bedienelemente für eben dieses Anheben vorzuhalten, werden auch aus der DE 10 2014 006890 A1 deutlich.

Andere vorgeschlagene gattungsgemässe Sockel sehen Pump-oder Ratschen-Vorrichtungen wie z.B. in der CN 105 249 638 A1 (Fig. 3 und Fig. 5) vor, was einen Betätigungsaufwand von erheblicher Dauer bedingt. Weiterhin ist beim Sockel der CN 105 249 638 A1 nicht a priori offensichtlich, ob sich der Sockel im standfesten oder im rollbaren Zustand befindet, was aus Sicherheitsaspekten unbefriedigend ist.

In der US 2012/0285 497 A1 wird vorgeschlagen, dass die Rollen einzeln abgesenkt und angehoben werden (Fig. 2, 3A, 3B), weiter wird das Absenken und Anheben von Standfüssen beschrieben (Fig. 9, 10A und 10B). Das Betätigen jeder einzelnen Rolle oder einzelnen Stand-Fusses ist umständlich, unübersichtlich und bedingt grossen Bedienungsaufwand und Sicherheitsrisiken. Die Zusammenführung der verschiedenen Standfuss-Baugruppen mit den jeweiligen Absenk- und Rückhohl-Mechaniken auf ein einziges zentrales Pump-Pedal bewirkt einen unerwünschten Herstellaufwand.

### Darstellung der Erfindung

Die Aufgabe der Erfindung ist es somit, einen beweglichen Standsockel der genannten Gattung vorzuschlagen, der die aufgezeigten Schwachstellen des Standes der Technik zu überwinden vermag und damit eine Lösung anzubieten, bei der eine standfeste Situation erreicht werden kann, ohne den Gewichtsteil, der den Sockel standfest macht, anheben zu müssen, und bei der die standfeste Position einfach und sicher eingenommen und gelöst werden kann. Dabei ist es weiterhin Aufgabe der Erfindung, einen beweglichen Standsockel zu entwickeln mit verschiedenen Gestaltungsmöglichkeiten in Bezug auf Gewicht, Design, einer begehbaren bzw. betretbaren Oberseite, wobei der Standsockel sowohl als Monoblock wie auch mittels eines Traggestells für mehrere Einzelgewichte ausgebildet werden kann, ohne das erfinderische Prinzip zu verlassen. Weiterhin ist für die Erfindung wichtig, eine einfache Bedienung mittels eines auf der Sockeloberfläche begrenzten Bedienelements für eine Fussbedienung, also ohne seitlich überstehende Teile, zur Verfügung zu haben. Auch soll leicht erkennbar sein, ob sich der Sockel im beweglichen oder im standfesten (blockierten) Zustand befindet. Schlussendlich soll der Sockel eine einfache und kostengünstige Bauweise ermöglichen, rutschfest auf glattem Boden sein und einen hohen Kippwiderstand aufweisen.

Die Aufgabe der Erfindung wird durch einen beweglichen Standsockel gemäss Anspruch 1 gelöst. Dabei bringen die Massnahmen der Erfindung eine wesentliche Vereinfachung der Bedienung mit einfachem Pedaldruck. Dabei ist die Bauweise sehr kompakt mit einer begehbaren Oberfläche, ohne seitlich vorstehende, verletzungsgefährdende Teile, sowie ohne lange vorstehendes Hubgestänge, wobei zudem kein mühsamer Pump- oder Kurbel-Aufwand erforderlich ist.

Sowohl bezüglich der Lenkrollen wie auch bezüglich der absenkbaren Blockierfüsse ist grundsätzlich eine Anzahl von jeweils drei Elementen ausreichend, da damit bekanntlich eine entsprechende Ebene definiert wird. Vorzugsweise sind jedoch vier oder gegebenenfalls noch mehr Lenkrollen bzw. Blockierfüsse vorgesehen, wobei diese zur Erfüllung ihrer Funktion je in einer gemeinsamen Ebene angeordnet sein müssen.

Vorteilhafte Ausführungsformen sind in den abhängigen Ansprüchen definiert.

Vorteilhaft wegen der einfachen Bauweise und der einfachen Ausgestaltung der Kräfteverhältnisse ist es, wenn die beiden gegenüberliegenden Brückenträger und das Mitteljoch H-förmig miteinander verbunden sind. Die Kraft, die aufgewendet werden muss, um den notwendigen Druck auf die Blockierfüsse zu bewirken, ohne dass der Gewichtsteil mit den Rollen vom Untergrund der Standfläche angehoben wird, wird durch die Distanz A zwischen dem Drehpunkt des Spannhebels am Gewichtsteil und der Druckstelle des Druckelementes wesentlich mitbestimmt. Vorteilhaft ist es, wenn die Distanz A grösser ist als die Distanz B. Eine vorteilhafte Ausgestaltung ist gegeben, wenn zumindest eine Zugfeder vorgesehen ist zwischen dem Mitteljoch und Gewichtsteil, die einen Zug nach oben ausübt. Vorteilhafterweise ist ein Gehäuse vorgesehen, welches eine Blokkierscheibe nach oben und unten schwenkbar hält, während die Blockierscheibe mit einem Loch das Druckelement umfängt und in der niedergedrückten Position durch Verkanten blockiert hält, wobei die Blockierscheibe mit Loch beim Niederdrücken ihres freien Endes auf Anschlagflächen aufliegt und so die Blockierung des Druckelementes lösbar ausgebildet ist. Dabei drückt zumindest eine Stützfeder das freie Ende der Blockierscheibe nach oben. Vorteilhafterweise sind die Stützfedern in Form von Federzungen als integrierte Teile des Gehäuses gebildet. Eine Druckfeder ist dabei so ausgebildet, dass sie das Blockier-Pedal nach oben drückt. Das Gewichtsteil kann als ein monolithischer Block ausgebildet sein, es kann aber auch als Baugruppe mit Lasten-Gestell und Zusatzlasten ausgebildet sein. Vorteilhafterweise sind die Bauteile Brückenträger, Mitteljoch und Spannhebel so angeordnet, dass sie in der Blockierstellung, aus Eigenspannung, einen anhaltenden Druck auf die Blockierfüsse ausüben. Für den Anbau der Schirmstange, Fahnenstange, Anzeigetafel etc. gibt es diverse Möglichkeiten. Möglich ist es, dass die mit dem Gewichtsteil verbundenen Anbauelemente ein Rohr für eine Stange umfassen. Alternativ kann aber auch eine Flanschplatte vorgesehen sein, an die dann - möglicherweise ebenfalls mittels eines Rohres oder direkt - die Schirmstange, Fahnenstange, Anzeigetafel etc. angeflanscht ist. Grundsätzlich kommen für das Druckelement verschiedene Ausgestaltungen wie beispielsweise bolzen- oder nockenartige Elemente in Frage. Vorteilhafterweise ist das Druckelement bolzenartig, d.h. als Druckbolzen ausgestaltet.

Die vorbenannten sowie die beanspruchten und in den nachfolgenden Ausführungsbeispielen beschriebenen, erfindungsgemäss zu verwendenden Elemente unterliegen in ihrer Grösse, Formgestaltung, Materialverwendung und ihrer technischen Konzeption keinen besonderen Ausnahmebedingungen, so dass die in dem jeweiligen Anwendungsgebiet bekannten Auswahlkriterien uneingeschränkt Anwendung finden können.

### Kurze Beschreibung der Zeichnungen

Weitere Einzelheiten, Vorteile und Merkmale des Gegenstandes der vorliegenden Erfindung ergeben sich aus der nachfolgenden Beschreibung der dazu gehörenden Zeichnungen, in denen - beispielhaft - ein erfindungsgemässer Standsockel erläutert wird. In den Zeichnungen zeigt:

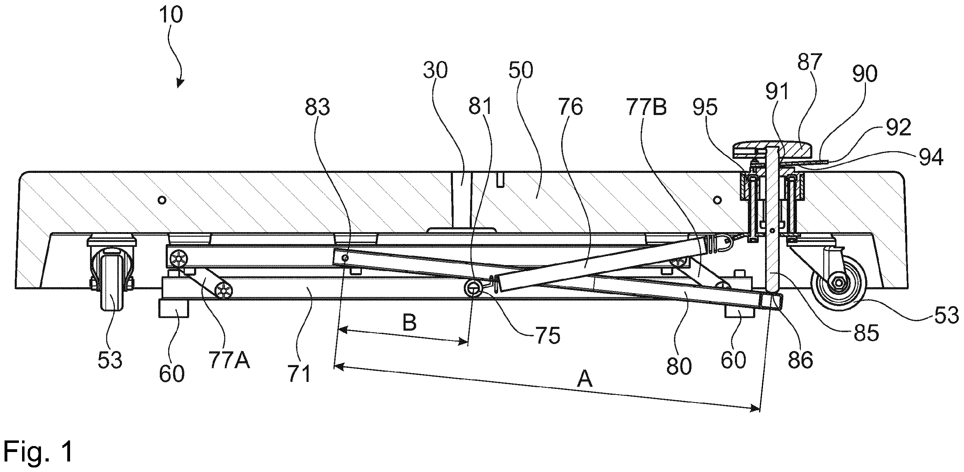

- Figur 1: einen Sockel gemäss einem ersten Ausführungsbeispiel von der Seite (im Schnitt),

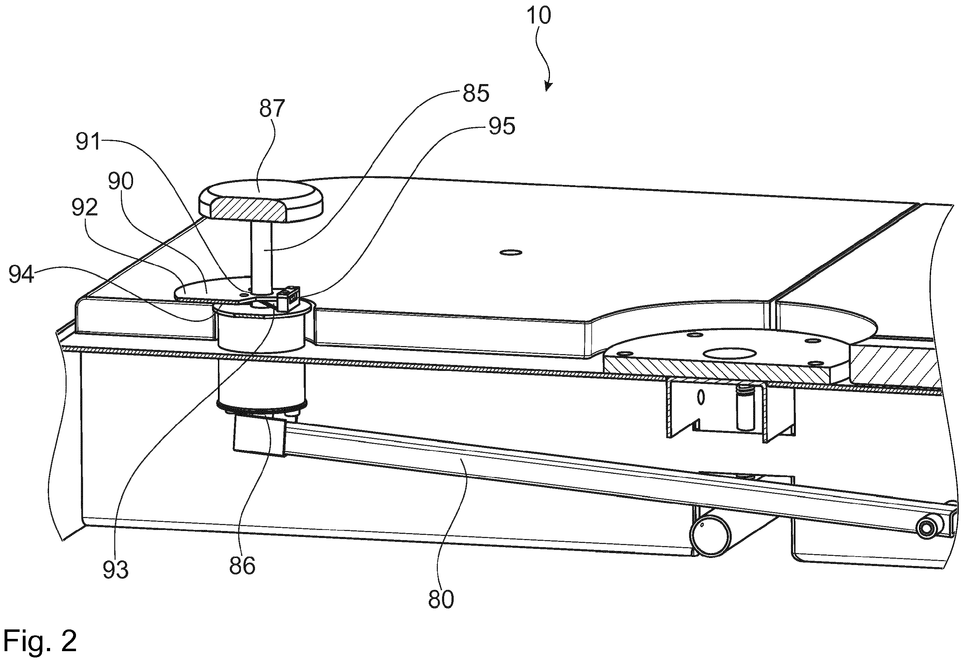

- Figur 2: die Blockiermechanik zum Sockel gemäss Figur 1,

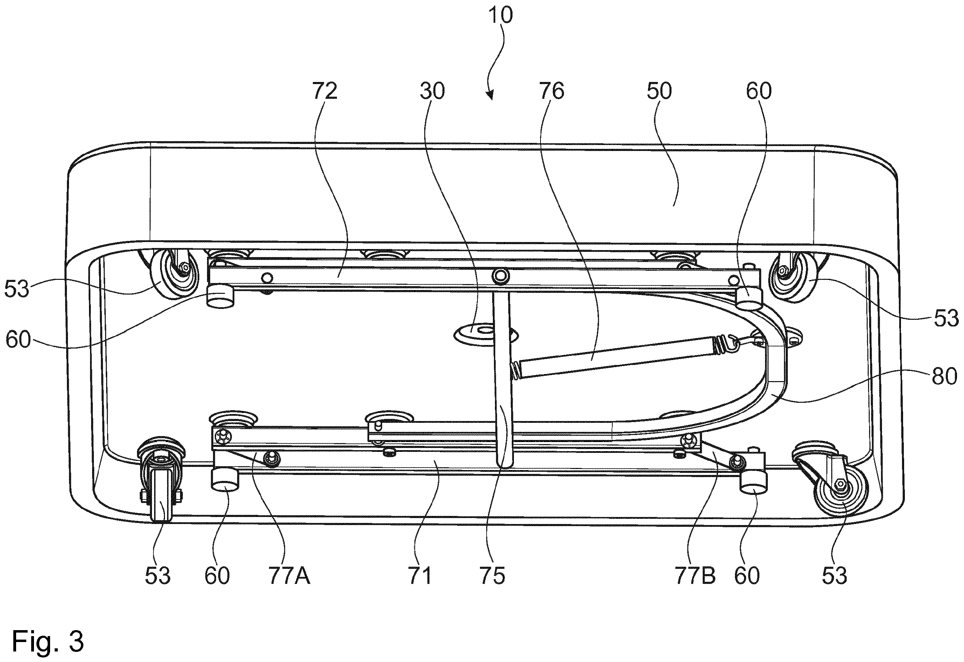

- Figur 3: eine perspektivische Zeichnung des Sockels gemäss Figur 1 schräg von unten im Zustand, in dem die Blockierfüsse angehoben sind,

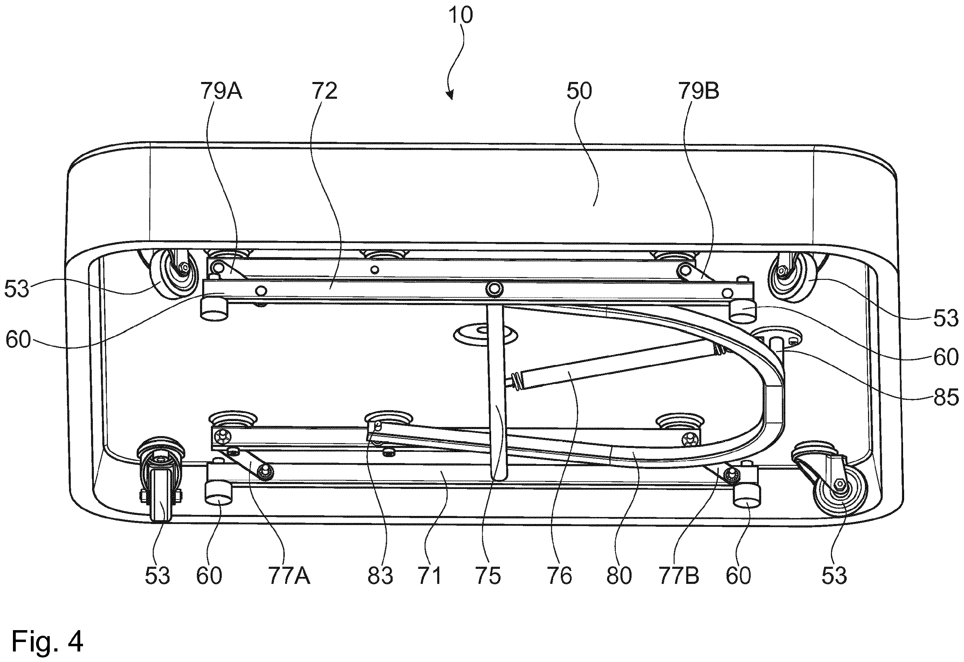

- Figur 4: eine perspektivische Zeichnung des Sockels gemäss Figur 1 schräg von unten im Zustand, in dem die Blockierfüsse abgesenkt sind,

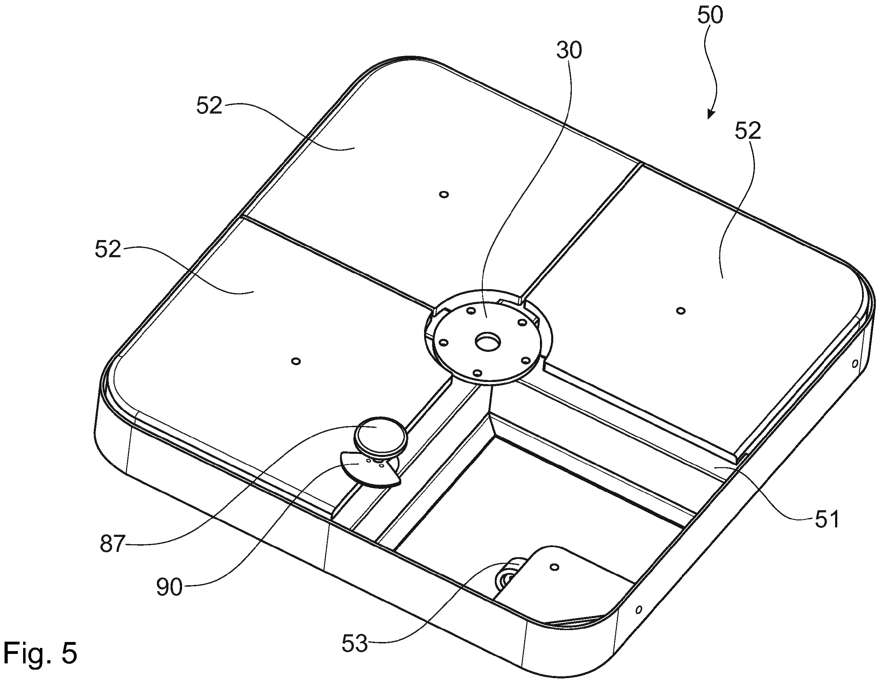

- Figur 5: eine Gewichtseinheit als Gestell mit Zusatzgewichten als Alternative zur Lösung mittels eines einzigen Gewichtsteils gemäss Figur 1, und

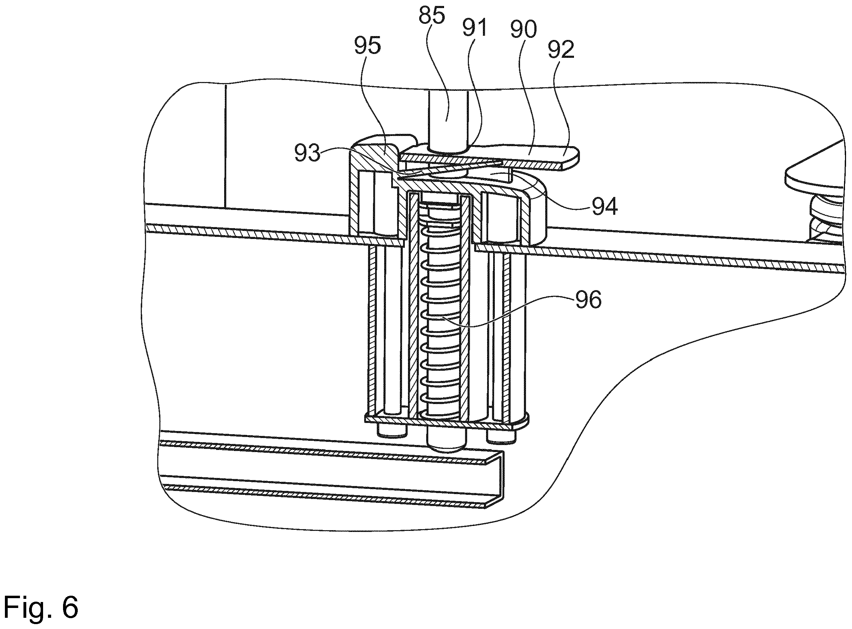

- Figur 6: eine Darstellung der Einrichtung mit der Pedalfeder.

### Wege zur Ausführung der Erfindung

Der in Figur 1 dargestellte bewegliche Standsockel 10 mit dem in der Sockelmitte eingelassenen Standrohr 30 als Anbauelement für einen Sonnenschirm, eine Fahne etc. weist im vorliegenden Ausführungsbeispiel einen Gewichtsteil 50 auf, in dessen Randbereich vier Lenkrollen 53 fest angebracht sind. An zwei, im Ausführungsbeispiel parallel gegenüberliegenden Brückenträgern 71, 72, die mittels eine Mitteljochs 75 zu einem H-förmigen Gerippe verbunden sind, befinden sich jeweils im Endbereich der Brückenträger 71, 72 vier Blockierfüsse 60. Die Brükkenträger 71, 72 sind jeweils über parallele Schwenkhebel 77A, 77B, 79A und 79 B mit dem Gewichtsteil 50 verbunden.

Am Gewichtsteil 50 ist ein - im Ausführungsbeispiel zweiarmiger - Spannhebel 80 angebracht, der mit seinem einen Ende auf- und abschwenkbar ist. Dabei liegt er auf dem Mitteljoch 75 auf und stellt mit seinem anderen Ende die Verbindung zu einem Druckbolzen 85 her, welcher zum Blockierpedal 87 auf der Oberseite des Gewichtsteiles 50 führt. Mit der Länge des Spannhebels 80, welche die Distanz zwischen Schwenkpunkt/Drehpunkt 83 und Auflagestelle 81 am Mitteljoch 75 übersteigt, wird die Kraftübersetzung bestimmt, welche vom Blockierpedal 87 auf die Blockierfüsse 60 wirken soll. Die Zugfeder 76 zwischen Mitteljoch 75 und dem Gewichtsteil 50 hebt bei gelöstem Druckbolzen 85 die Blockierfüsse 60 vom Boden ab.

Das Aufrechterhalten der Druckspannung zwischen Blockierfüssen und Druckbolzen wird durch das Verkanten der Blockierscheibe 90 bewirkt, die den Druckbolzen 85 mit einem Loch 91 umfängt. Zu diesem Zweck ist die Blockierscheibe 90 einseitig in einem Kunststoffgehäuse 95 auf- und abklappbar gehalten und wird durch Federzungen der Stützfeder 93, ausgebildet als Integralbestandteile des Kunststoffgehäuses 95, nach oben gedrückt. Zum Lösen der Blockierung genügt ein Fussdruck auf das freie Ende 92 der Blockierscheibe 90, wobei diese durch die Anschlagflächen 94 des Kunststoffgehäuses in die "gelöst" Position zu stehen kommt. Im Ausführungsbeispiel wird zusätzlich zur Feder 76 am Mitteljoch 75 eine Pedal-Feder 96 eingesetzt.

Bei hohem Gewichtsbedarf ist es vorteilhaft, gemäss einem alternativen Ausführungsbeispiel wie in Figur 5 dargestellt, mehrere Gewichtskörper als Zusatzlasten 52 in einem Lasten-Gestell 51 zusammenzufassen.

Es sollte darauf hingewiesen werden, dass der in Figur 6 dargestellte Blockiermechanismus im Wesentlichen herkömmlichen Türstoppern etc. entspricht, an deren unterem Ende dann jeweils ein einzelner Blockierfuss angebracht ist. Hervorstechend für die in den Figuren gezeigten Ausgestaltungen der Erfindung ist die flache Bauweise der Mechanik für den Wechsel von fahrbarem zu blokkiertem Zustand. Die Lenkrollen 53 sind, breit abstützend, fest am Gewichtsteil 50 fixiert. Zum Fixieren gegen Wegrollen oder Kippen dienen Blockierfüsse 60 mit Antirutschflächen in unmittelbarer Nähe des Randes oder der Eckpunkte der Sockelgrundfläche.

### Bezugszeichenliste

- 10: Standsockel
- 30: Anbauelemente
- 50: Gewichtsteil
- 51: Lasten-Gestell
- 52: Zusatzlasten
- 53: Lenkrollen
- 60: Blockierfüsse
- 71: Brückenträger
- 72: Brückenträger
- 75: Mitteljoch
- 76: Zugfeder
- 77A und B: Schwenkhebel
- 79A und B: Schwenkhebel
- 80: Spannhebel
- 81: Auflagestelle
- 83: Drehpunkt
- 85: Druckelement
- 86: Druckstelle
- 87: Blockierpedal
- 90: Blockierscheibe
- 91: Loch zum Verkanten
- 92: Freies Ende der Scheibe
- 93: Stützfedern
- 94: Anschlagflächen
- 95: Kunststoff-Gehäuse
- 96: Pedal-Feder

## Patentansprüche

1. Beweglicher Standsockel (10) für Sonnenschirme, Anzeigetafeln, Fahnenstangen und dergleichen, mit einem Gewichtsteil (50), auf dessen Unterseite zumindest drei, vorzugsweise vier Lenkrollen (53) fest angeordnet sind, mit Anbauelementen (30) für einen Sonnenschirm, eine Anzeigetafel, eine Fahnenstange oder für andere aufzustellende Gegenstände, und mit einer Anzahl von vorzugsweise vier absenkbaren Blockierfüssen (60), **dadurch gekennzeichnet dass** die Blockierfüsse (60) im Randbereich des Gewichtsteiles (50) über zwei gegenüberliegende Brückenträger (71, 72) und ein Mitteljoch (75) miteinander verbunden und über je zwei Schwenkhebel (77A und 77B), (79A und 79B) im Wesentlichen parallellogrammartig absenkbar am Gewichtsteil (50) verankert sind und ein Spannhebel (80) auf dem Mitteljoch (75) aufliegend angebracht ist, und ein Druckelement (85) zu einem Blockier-Pedal (87) auf der Oberseite des Standsockels (10) führt.

2. Beweglicher Standsockel (10) nach Anspruch 1, **dadurch gekennzeichnet, dass** die beiden gegenüberliegenden Brückenträger (71, 72) und das Mitteljoch (75) im wesentlichen H-förmig miteinander verbunden sind.

3. Beweglicher Standsockel (10) nach Anspruch 1 oder 2, **dadurch gekennzeichnet, dass** die Distanz (A) zwischen dem Drehpunkt (83) des Spannhebels (80) am Gewichtsteil (50) und der Druckstelle (86) des Druckelementes (85) grösser ist als die Distanz (B) zwischen Drehpunkt (83) und Auflage am Mitteljoch (75).

4. Beweglicher Standsockel (10) nach einem der vorstehenden Ansprüche, **dadurch gekennzeichnet, dass** zumindest eine Zugfeder (76) vorgesehen ist, zwischen Mitteljoch (75) und Gewichtsteil (50) einen Zug nach oben auszuüben.

5. Beweglicher Standsockel (10) nach Anspruch 4, **dadurch gekennzeichnet, dass** ein Gehäuse (95) vorgesehen ist, welches eine Blockierscheibe (90) nach oben und unten schwenkbar hält, während die Blockierscheibe (90) mit einem Loch (91) das Druckelement (85) umfängt und in der niedergedrückten Position durch Verkanten blockiert hält, wobei die Blockierscheibe (90) mit Loch (91) beim Niederdrücken ihres freien Endes (92) auf Anschlagflächen (94) aufliegt und so die Blockierung des Druckelementes (85) lösbar ausgebildet ist.

6. Beweglicher Standsockel (10) nach Anspruch 5, **dadurch gekennzeichnet, dass** zumindest eine Stützfeder (93) das freie Ende (92) der Scheibe (90) nach oben drückt.

7. Beweglicher Standsockel (10) nach Anspruch 6, **dadurch gekennzeichnet, dass** die Stützfedern (93) in Form von Federzungen als integrierte Teile des Gehäuses (95) gebildet sind.

8. Beweglicher Standsockel (10) nach Anspruch 7, **dadurch gekennzeichnet, dass** eine Druckfeder (96) das Blockier-Pedal (87) nach oben drückt.

9. Beweglicher Standsockel (10) nach einem der vorstehenden Ansprüche, **dadurch gekennzeichnet, dass** das Gewichtsteil (50) eine Baugruppe mit Lasten-Gestell (51) und Zusatzlasten (52) aufweist.

10. Beweglicher Standsockel (10) nach einem der vorstehenden Ansprüche, **dadurch gekennzeichnet, dass** die Bauteile Brückenträger (71, 72), Mitteljoch (75) und Spannhebel (80) so angeordnet sind, dass sie in der Blokkierstellung, aus Eigenspannung, einen anhaltenden Druck auf die Blokkierfüsse (60) ausüben.

11. Beweglicher Standsockel (10) nach einem der vorstehenden Ansprüche, **dadurch gekennzeichnet, dass** das Druckelement (85) als Druckbolzen ausgestaltet ist.
